# EUROPÄISCHE PATENTANMELDUNG

(11) **EP 1 193 658 A1**
(43) Veröffentlichungstag der Anmeldung: **03.04.2002**
(21) Anmeldenummer: 00121482.4
(22) Anmeldetag: 29.09.2000
(51) Int. Cl.: G07F 19/00, G07F 7/10

(54) **Verfahren und Anordnung zur Übertragung eines elektronischen Geldbetrages aus einem Guthabenspeicher**

(71) Anmelder: SIEMENS AKTIENGESELLSCHAFT, 80333 München (DE)
(72) Erfinder: Vindeby, Per, 81739 München (DE)

(57) **Zusammenfassung**

Verfahren zur Übertragung eines elektronischen Geldbetrages aus einem Guthabenspeicher eines Geldsenders auf ein Konto bzw. in einen Guthabenspeicher eines Geldempfängers über ein Telekommunikations- und Datennetz, wobei die Übermittlung der erforderlichen Daten unter Bezugnahme auf einen Identifikationscode des Geldempfängers oder der Geldübertragung zwischen einem ersten und einem zweiten Server mindestens eines Dienstbetreibers erfolgt.

## Beschreibung

Die Erfindung betrifft ein Verfahren sowie eine Anordnung zur Übertragung eines elektronischen Geldbetrages aus einem Guthabenspeicher auf ein Konto bzw. in einen anderen Guthabenspeicher über ein Telekommunikations- und Datennetz.

Das Internet gewinnt - neben der Nutzung als Kommunikationsmittel und Informationsquelle für mittlerweile Hunderte von Millionen Menschen - zunehmend an Bedeutung als Einkaufsquelle. Insbesondere der Handel mit Software, Büchern und Reisen läuft heute bereits zu einem nennenswerten Anteil im Internet ab, zunehmend wird aber auch ein breites Spektrum sonstiger Waren und Dienstleistungen über das Internet bestellt und bezahlt. Die Bezahlung der entsprechenden Leistungen im Internet auf die ursprünglich etablierte und heute noch meist verbreitete Weise erfordert die jeweils gesonderte Eingabe der relevanten Datensätze zumindest bei jedem Geschäftspartner, wenn nicht sogar für die einzelne Transaktion. Diese Zahlungsweise gibt damit dem Geschäftspartner Einblick in sensible persönliche Daten und sogar die Möglichkeit ihrer dauerhaften Speicherung.

Auch für die Abwicklung sonstiger Zahlungsvorgänge im geschäftlichen wie im privaten Bereich hat das Internet inzwischen erhebliche Bedeutung erlangt. Nahezu alle Banken in den Industrieländern bieten als "Electronic Banking" die elektronische Abwicklung der Kontoführung und von Zahlungsvorgängen an.

Gleichwohl erfolgt die Mehrzahl der Zahlungsvorgänge des täglichen Lebens auch heute noch per Bargeld oder durch schriftliche Erteilung von Überweisungs- oder Einzugsaufträgen o. ä. oder bei Kredit- bzw. Scheckkarte. Auf speziellen Gebieten, etwa dem der Mobilfunktechnik, haben auch elektronische Guthaben (sog. "Prepaid-Karten") Bedeutung erlangt, einer breiten Einführung dieses Zahlungsmittels stehen aber erhebliche Hindernisse im Wege. Diesen stehen allerdings auch erhebliche Vorteile gegenüber bargeldlosen "Postpaid"-Verfahren gegenüber, insbesondere die Anonymität des Nutzers gegenüber dem Händler, das Fehlen formeller Kreditwürdigkeit (das das Verfahren besonders für Jugendliche attraktiv macht), die einfache Ausgabenkontrolle und die Sicherheit vor Stornierungen für den Händler.

Insgesamt ist festzustellen, daß beim derzeitigen Stand der Entwicklung eine höchst unübersichtliche Vielzahl von Möglichkeiten der Bezahlung von Waren oder Dienstleistungen besteht, deren Handhabung im täglichen Leben erhebliche Aufmerksamkeit und den Umgang mit den verschiedensten Medien bzw. Eingabemodi erfordert. Das ist lästig und zudem mit vielfältigen Sicherheitsrisiken (Verlust von Daten- bzw. Guthabenträgern, Vergessen von Kontendaten bzw. Authentisierungscodes etc.) verbunden.

Neben dem Internet stellt die Telekommunikation - insbesondere die mobile Telekommunikation - heute ein Gebiet mit rasanter technischer und wirtschaftlicher Entwicklung und eine wesentliche Quelle wirtschaftlichen Wachstums und neuer sozialer Entwicklungen dar. Für einen Großteil der Menschen in den Industrieländern wird das Mobiltelefon ("Handy") mehr und mehr zu einem universellen Kommunikations- und Informationsinstrument und auch zunehmend für den Zugriff auf Waren und Dienstleistungen genutzt. Auch diese Entwicklung wird noch durch unzureichende Möglichkeiten für eine sichere und zugleich einfache Bezahlung von über das Handy bestellten Informationen, Waren und Dienstleistungen behindert.

Zwar gibt es Lösungen, die dem Nutzer eines Handys - mit oder ohne Prepaid-Karte - die Autorisierung von Zahlungen ermöglichen, welche anschließend auf an sich konventielle Weise per Lastschriftverfahren oder Kreditkarten-Abbuchung abgewickelt werden. Diese Verfahren setzen jedoch, wie auch die im Internet inzwischen eingebürgerten Zahlungsabwicklungen, die Kreditwürdigkeit des Käufers und die Verfügungsbefugnis über eine Kreditkarte oder ein Girokonto mit Dispositionskredit voraus. Zudem wohnen diesen Verfahren zeitliche Verschiebungen inne, die sich nachteilig auf die Transparenz und Zuverlässigkeit der Gesamtabwicklung auswirken.

Der Erfindung liegt daher die Aufgabe zugrunde, ein Verfahren und eine Anordnung zur vereinfachten Abwicklung von Zahlungsverkehr unter Nutzung eines verknüpften Telekommunikations- und Datennetzes anzugeben.

Diese Aufgabe wird hinsichtlich ihres Verfahrensaspektes gelöst durch ein Verfahren mit den Merkmalen des Anspruchs 1 und hinsichtlich ihres Vorrichtungsaspektes durch eine Anordnung mit den Merkmalen des Anspruchs 11.

Die Erfindung schließt den wesentlichen Gedanken ein, ein weitgehend universelles Zahlungsverfahren auf der Grundlage eines elektronischen Guthabens (Prepaid-Konto bzw. -Karte) anzugeben, welches für eine Zahlungsabwicklung im sogenannten B2C(Business-to-Consumer)-Bereich wie auch im C2C(Consumer-to-Consumer)-Bereich anwendbar ist, also sowohl den Einkauf in realen und virtuellen Geschäften, die Bezahlung in gastronomischen oder kulturellen Einrichtungen oder an Warenausgabeautomaten etc. als auch die "Übersendung" von Geldbeträgen im privaten Bereich ermöglicht. Sie schließt weiter den Gedanken ein, hierzu die Möglichkeiten eines verknüpften Telekommunikations- und Datennetzes zu nutzen, und zwar insbesondere die Möglichkeit einer Abwicklung in Echtzeit (Real Time) unter Nutzung eines dem Geldempfänger allgemein oder der einzelnen Transaktion zugeordneten Codes.

Unter einem elektronischen Guthaben wird hier ein Speicherinhalt eines über ein Telekommunikations- bzw. Datennetz zur Durchführung von Zahlungsverkehr handhabbaren Guthabenspeichers verstanden - grundsätzlich unabhängig davon, ob der Speicher tatsächlich ein vorausbezahltes Guthaben aufweist oder ein Guthabenbetrag erst zu einem späteren Zeitpunkt transferiert wird. In der nachfolgenden Beschreibung und den Patentansprüchen wird der Inhaber des Prepaid-Guthabens, der einen Geldbetrag übertragen möchte und in einem (realen oder virtuellen) Geschäft als Käufer und in einer gastronomischen Einrichtung als Gast in Erscheinung tritt, allgemein als "Geldsender" bezeichnet. Der Empfänger des zu übertragenden Geldbetrages, bei dem es sich im täglichen Leben zumeist um den Inhaber bzw. Betreiber eines Geschäftes oder einer gastronomischen oder kulturellen Einrichtung o. ä. handeln wird, wird nachfolgend allgemein "Geldempfänger" bezeichnet. Geldempfänger und Geldsender können im übrigen auch Applikationen sein, der Geldempfänger beispielsweise eine Applikation in einem Warenausgabeautomaten (Vending Machine).

Kernstücke der vorgeschlagenen Anordnung und des vorgeschlagenen Verfahrens sind ein erster und ein zweiter Server von Dienstbetreibern (bzw. auch eines einzelnen Dienstbetreibers), auf denen ein für elektronische Geldübertragungen zugängliches Konto des Geldempfängers und ein elektronisches Guthaben bzw. ein für eine elektronische Geldübertragung zugängliches Konto des Geldsenders verwaltet werden. Auf diesen Servern - die im Extremfall auch durch einen einzigen Server eines einzelnen Dienstbetreibers realisiert sein können - sind neben den zugehörigen Kontonummern (Kontencodes) die für die Adressierung der im Zusammenhang mit der Geldübertragung auszutauschenden Informationen erforderlichen Kennungen des Geldempfängers und Geldsenders gespeichert, die nachfolgend allgemein als erster bzw. zweiter Identifikationscode bezeichnet werden.

Es kann sich hierbei im einfachsten Fall jeweils um eine Endgeräte-Rufnummer eines vom Geldempfänger bzw. Geldsender benutzten Telekommunikations-Endgerätes handeln. Jedoch kann dieser Identifikationscode - bei Zusammenwirken unterschiedlicher Server, speziell von verschiedenen Betreibern notwendigerweise - eine Server-Kennung und für den Fall internationaler Geldtransfers auch eine Länderkennung (Landesvorwahl eines Telekommunikationsnetzes) umfassen. Es handelt sich hierbei um einen dauerhaften, "statischen" Identifikationscode.

In einer anderen Ausprägung des Erfindungsgedankens werden Identifikationscodes "dynamisch" gehandhabt, indem für jede Geldübertragung im Rahmen eines Dienstes eine eindeutige Transaktionsnummer (TAN) vergeben wird, die bei dem erforderlichen Informationsaustausch als Adresse dient. Eine solche Transaktionsnummer wird vom Geldempfänger vor einer auszuführenden Geldübertragung oder zu deren Beginn vom ersten Server seines Dienstbetreibers angefordert und von diesem unter Beachtung des Erfordernisses der Eindeutigkeit beispielsweise mittels eines Zufallsgenerators erzeugt.

Der zu übertragende Geldbetrag wird seitens des Geldsenders oder -empfängers an dessen jeweiligem Endgerät bzw. einer mit diesem verbundenen Kasse oder anderen Eingabeeinrichtung eingegeben. Dies kann auch in der zweiten Phase eines Ablaufes geschehen, bei dem zunächst der Identifikationscode ausgetauscht und geprüft und dann der Geldsender über eine Ansage oder Menüführung seitens des zuständigen Servers aufgefordert wird, den Geldbetrag einzugeben. Auf diese Aufforderung hin nimmt er dann die relevante Eingabe vor.

Die Nutzung dieser Anwendung im kommerziellen Bereich ("B2B" oder "B2C") erfolgt vorzugsweise im Rahmen einer Subskription durch den Geldempfänger. Hierbei wird der Geldempfänger im Normalfall ein Bankkonto angeben, auf das das im Rahmen der Prepaid-Shopping-Anwendung in seinen elektronischen Guthabenspeicher übertragene Geld letztlich transferiert wird. Weiterhin kann die Transaktions-Währung spezifiziert werden. Für den Geldsender besteht keine Notwendigkeit, sich für das Geldübertragungsverfahren zu subskribieren. Aus Sicherheitsgründen ist jedoch bevorzugt die Autorisierung der Geldübertragung unter Nutzung vorbestimmter Authentisierungsmittel vorgesehen; siehe dazu weiter unten.

Die bevorzugte Subskription des Dienstes durch den Geldempfänger ist ebenfalls nicht zwingend notwendig. Ohne formelle Subskription kann allerdings keine Bankverbindung angegeben werden, so daß der in den elektronischen Guthabenspeicher ("Prepaid-Konto") übertragene Geldbetrag nicht weiter transferiert werden kann. In dieser Ausgestaltung eignet sich das Verfahren insbesondere für den Geldtransfer zwischen Privatleuten ("C2C").

Nach Herstellung der Verbindung bzw. Verbindungen der Endgeräte zum ersten bzw. zweiten Server können die erforderlichen Ein- und Ausgaben zum einen über eine Sprachverbindung mit Spracheingabe oder DTMF-Eingabe und Sprachausgabe, zum anderen über den Austausch von Textnachrichten (insbesondere SMS oder E-Mail) oder auch mittels einer Kombination aus diesen oder per USSD vorgenommen werden.

Mit dem oben erwähnten Subskriptionsvorgang wird ein den Geldempfänger betreffender Datensatz in einer Transaktions-Datenbasis beim ersten Server abgelegt. Das Konto des Geldempfängers muß zur Verwaltung elektronischer Guthaben geeignet sein; es kann sich hierbei insbesondere - wie beim Geldsender - um ein Prepaid-Konto handeln. Der Geldempfänger kann mehrere Telefonnummern und auch mehrere Zielkonten für die Geldübertragung benutzen, wobei in diesem Fall natürlich alle einzusetzenden Telefonnummern und Kontonummern in der Datenbasis zu hinterlegen sind. (Mit dem Begriff "Kontencode" wird nachfolgend die Gesamtheit aus einer Kontonummer bzw. einem Kontencode und der gegebenenfalls benötigten Server-Adresse eines externen Servers verstanden, auf dem das Konto verwaltet wird.) Neben den erwähnten Daten umfaßt der in der Transaktions-Datenbasis gespeicherte Geldempfänger-Datensatz zweckmäßigerweise auch einen Namen bzw. Firmennamen.

Eine wesentliche Sicherheitskomponente stellt der bereits erwähnte Authentisierungsdatensatz innerhalb des Geldsender-Datensatzes dar. Dieser umfaßt neben der MSISDN insbesondere einen Authentisierungscode (PIN o. ä.) und/oder biometrische Daten des Geldsenders (z. B. Papillarlinien- oder Retinamuster), der bzw. die zur fallweisen Autorisierung von Geldübertragungen genutzt werden. Dieser Code bzw. diese Daten werden am Endgerät des Geldsenders oder an einem diesem zugeordneten Eingabegerät eingegeben, zum ersten Server übermittelt und dort mit den entsprechenden hinterlegten Daten verglichen. Im Ergebnis des Vergleiches wird die Transaktion freigegeben oder gesperrt. Seitens des Geldempfängers werden im kommerziellen Bereich an sich bekannte und im Geschäftsverkehr praktizierte Authentisierungsmechanismen angewandt.

Die erwähnten Autorisierungsschritte werden in einer bevorzugten Verfahrensdurchführung bei Kleinstbeträgen nicht ausgeführt, sondern nur bei einen vorbestimmten Schwellwert übersteigenden Geldbeträgen. Dieser Schwellwert ist vorteilhafterweise durch den Dienstbetreiber oder den Geldsender selbst einstell- bzw. änderbar.

Die vorgeschlagene Lösung umfaßt die Funktionsblöcke (1) Start des Geldübertragungsverfahrens und Prüfungsvorgänge, (2) Abbuchung beim Geldsender und (3) Aufbuchung beim Geldempfänger. Diese Funktionsblöcke können auf ein und demselben oder verschiedenen Servern ablaufen, für die die Termini "erster Server" und "zweiter Server" stehen. Der oder die Server kann bzw. können zentral bei einem Dienstbetreiber oder in mehreren Hardware-Implementierungen bei diesem oder auch bei mehreren Dienstbetreibern existieren. Die Anwendung hat - wie oben bereits erwähnt - bevorzugt Zugriff auf eine Datenbasis, die (je nach konkretem Netz- und Anwendungskonzept) ebenfalls zentral bei einem Server, verteilt beim ersten oder zweiten Server oder auch in mehreren Kopien an verschiedenen Stellen vorliegen kann.

Das vorgeschlagene Verfahren bietet als Echtzeitverfahren eine gegenüber bekannten Zahlungsabwicklungsverfahren verbesserte Transparenz und Zuverlässigkeit Es erbringt zudem den wesentlichen Vorteil, daß das auf einem Prepaidkonto vorhandene elektronische Geld nicht nur für die Bezahlung einer eng spezifizierten Dienstleistung (speziell von Telefongesprächen), sondern in vielfältiger Weise für die Bezahlung von Waren, Dienst-leistungen, Informationen etc. in realen wie auch in virtuellen Verkaufseinrichtungen aller Art genutzt werden kann. Über die Vorausbezahlung des Guthabens hat der Nutzer eine strenge Kostenkontrolle über wesentliche Teile seiner Lebenshaltungskosten, und eine unbeabsichtigte Verschuldung ist prinzipiell ausgeschlossen. Damit ist dieses Verfahren besonders vorteilhaft auch für Minderjährige (oder auch für nicht mehr im vollem Besitz ihrer geistigen Kräfte befindliche ältere Menschen) einsetzbar, für die es bislang keine vergleichbare Anwendung gibt.

Weitere wesentliche Vorteile der vorgeschlagenen Lösung bzw. von speziellen Ausgestaltungen derselben sind die folgenden:
- Das Verfahren funktioniert unabhängig davon, ob eine formelle Subskription seitens des Geldempfängers erfolgt ist.
- Geldsender und Geldempfänger können bei unterschiedlichen Betreibern registriert sein, und es ist nicht einmal erforderlich, daß der Dienstbetreiber des Geldsenders einem anderen Dienstbetreiber den Identifikationscode (die MSISDN) des Geldsenders übermittelt.
- Der Geldsender bleibt sowohl gegenüber dem Geldempfänger selbst als auch gegenüber dem Betreiber des Geldempfängers anonym, da keine personenspezifischen Daten übergeben werden.
- Für den Geldempfänger besteht auch dann keine Notwendigkeit, sich bei mehreren Dienstbetreibern anzumelden, wenn er Kontakt zu bei verschiedenen Dienstbetreibern registrierten Geldsendern hat.
- Für die ganze Transaktion wird nur eine kurze Zeitspanne benötigt, sie läuft also nahezu in Echtzeit ab.
- Der Geldsender kann dauerhaft seine Transaktionen über den ihm bekannten und vertrauten Dienstbetreiber abwickeln, wodurch er eine hohe Sicherheit für seine Geldübertragungen gewinnt.
- Die Infrastruktur der vorhandenen Mobilfunknetze und Dienstbetreiber kann auf der Consumer-Seite sinnvoll eingesetzt werden.
- Das Verfahren ist weitgehend resistent gegen mißbräuchliche Blockadeversuche von außerhalb.

Vorteile und Zweckmäßigkeiten der Erfindung ergeben sich im übrigen aus den Unteransprüchen sowie der nachfolgenden Beschreibung eines bevorzugten Ausführungsbeispiels anhand der Figuren. Von diesen zeigen:
Figur 1 ein stark vereinfachtes Funktions-Blockschaltbild einer ersten Ausführungsform der erfindungsgemäßen Anordnung und
Figur 2 ein stark vereinfachtes Funktions-Blockschaltbild einer zweiten Ausführungsform.

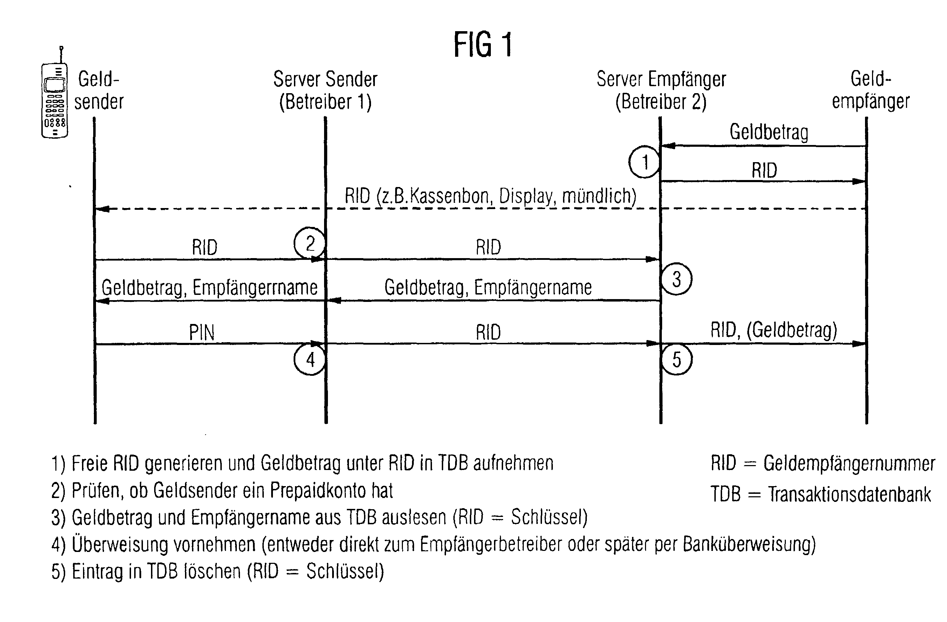

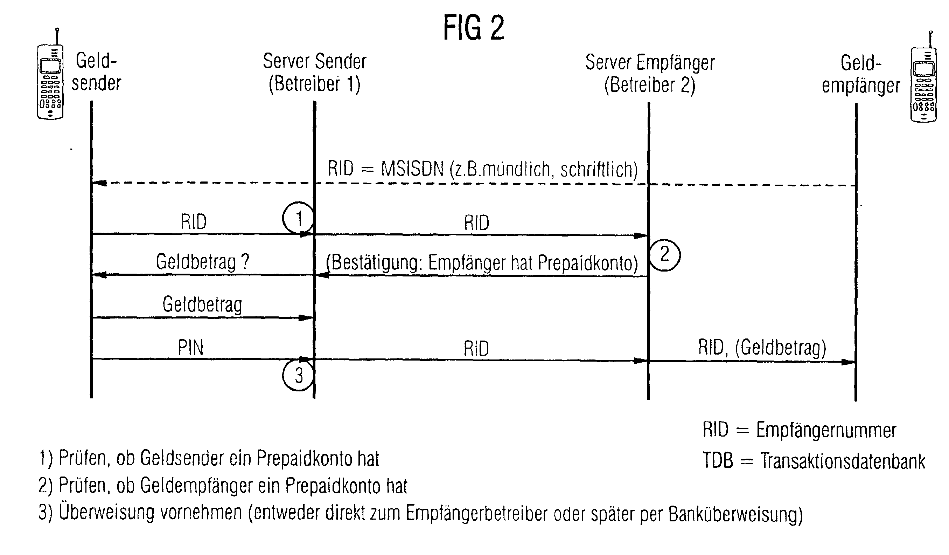

Fig. 1 zeigt eine schematische Darstellung wesentlicher Schritte der vorgeschlagenen Anwendung in einer ersten Ausführungsform (Consumer-to-Vendor) und Fig. 2 eine schematische Darstellung wesentlicher Schritte der vorgeschlagenen Anwendung in einer zweiten Ausführungsform (Consumer-to-Consumer).

Die Figuren sind aufgrund ihrer Beschriftung im wesentlichen selbsterklärend, so daß nachfolgend keine detaillierte Figurenbeschreibung gegeben wird.

Es wird darauf hingewiesen, daß in Fig. 1 und 2 davon ausgegangen wird, daß die Anwendung und durch diese gehandhabte Prepaid-Konten auf unterschiedlichen Servern verschiedener Betreiber verwaltet werden. Oben wurde bereits darauf hingewiesen, daß die Anwendung ebenso auf verschiedenen Servern eines einzigen Dienstbetreibers oder auch auf ein und demselben Server eines Dienstbetreibers laufen kann, auf dem sowohl ein Prepaid-Guthaben des Geldsenders als auch ein elektronisch zugreifbares Konto des Geldempfängers verwaltet werden.

Zunächst wird in Verbindung mit Fig. 1 der Fall betrachtet, daß ein Verbraucher (Consumer) für die Bezahlung einer Ware oder Dienstleistung in einem Geschäft, an einem Automaten oder auch im Internet (bei einem "Vendor") durch Geldübertragung von seinem Prepaid-Guthaben bezahlen will.

Für den Empfang des Geldes benötigt der Geldempfänger (Vendor) einen gültigen Identifikationscode für die vorgesehene Geldübertragung, der speziell als Ziffernfolge ausgebildet sein kann und in diesem Fall als Transaktionsnummer (TAN) bezeichnet wird. Diese TAN erhält der Geldempfänger über eine fest geschaltete oder erst bei Bedarf aufgebaute Verbindung zu seinem Dienstbetreiber. Die TAN kann unmittelbar vor dem Verkauf der Ware oder Dienstleistung und dem damit verbundenen Geldübertragungsvorgang oder auch im voraus - d. h. vor Bekanntsein des zu überweisenden Geldbetrages - generiert und an den Geldempfänger übermittelt werden.

Die Zuweisung einer TAN im voraus kann sinnvoll sein, um den Ablauf der Transaktion zu beschleunigen. Bei dieser Variante muß für den eigentlichen Zahlungsvorgang mit der TAN als Adresse (Schlüssel) der zu übertragende Geldbetrag in einer Transaktions-Datenbasis gespeichert werden. In der alternativen Ausführung wird der Geldbetrag in Verbindung mit der Anforderung der TAN an den Dienstbetreiber übermittelt und durch den ersten Server sogleich zusammen mit der aktuell generierten TAN in der Transaktions-Datenbasis eingetragen. Es versteht sich, daß in die Datenbasis zusammen mit der die Adresse bildenden Transaktionsnummer und dem Geldbetrag eine Kennung des Geldempfängers eingetragen wird, insbesondere dessen Endgeräte-Rufnummer oder auch sogleich ein Kontencode von dessen für den Geldübertragungsvorgang zu benutzendem Prepaid-Konto.

Für den Handel in realen Geschäften ist eine Ausführung bevorzugt, bei der die Kasseneinrichtung direkt mit einem Endgerät zur Verbindung mit dem ersten Server gekoppelt ist, so daß bei einem Prepaid-Zahlungsvorgang automatisch eine Verbindung zum Dienstbetreiber aufgebaut und der zu übertragende Geldbetrag selbsttätig übermittelt wird. Bei virtuellen Geschäften (Internet-Shops) ist die selbsttätige Übermittlung des Geldbetrages der Regelfall.

Die Transaktionsnummer wird durch den Geldempfänger dem Geldsender zur Kenntnis gegeben; dies geschieht in einem realen Geschäft insbesondere durch Ausdruck auf dem Kassenbon, optische Anzeige auf der Kasseneinrichtung oder einem Zusatzgerät oder u. U. auch mündlich und beim Internet-Shopping durch Anzeige auf dem Bildschirm oder Handy-Display des Geldsenders - je nach konkreter Ausführung der Anwendung ist aber auch die Nutzung separater technischer Übertragungskanäle (Bluetooth, Interoute, ...) praktikabel.

Nachdem der Geldsender nun die TAN kennt, etabliert er eine Verbindung zu dem Server seines Dienstbetreibers (hier zumeist als "zweiter Server" bezeichnet). Diese Rufnummer ist grundsätzlich unveränderlich und stellt eine Endgeräte-Rufnummer oder eine Sondernummer (IN-Servicenummer) dar. Sie ist zweckmäßigerweise im Endgerät des Geldsenders vorgespeichert - entweder im Telefonbuch oder direkt im Hauptmenü in Zuordnung zu einer Auswahltaste. Auch eine Signalisierungsverbindung mit USSD ist für die Übermittlung nutzbar.

Hierbei ist zu beachten, daß die Eingabe der "reinen" TAN nur dann ausreichend ist, wenn der Geldempfänger beim gleichen Dienstbetreiber registriert ist wie der Geldsender. Ansonsten muß vor Eingabe der TAN eine Betreiber-ID (NDC) eingegeben werden, und bei einer internationalen Geldübertragung zusätzlich die Landesvorwahl bzw. Kennung des ausländischen Netzes, in dem der Server des ausländischen Dienstbetreibers erreichbar ist. Es versteht sich, daß die Eingabe eines insoweit vollständigen (maximalen) Identifikationscodes die Handhabung all dieser Fälle ermöglicht - allerdings um den Preis eines längeren Eingabevorganges.

Nach der Übermittlung der Daten, mit der das Geldübertragungsverfahren gestartet ist, folgt zunächst ein Prüfungsvorgang im Hinblick darauf, ob der Identifikationscode gültig und der Betrag auf dem Prepaid-Konto des Geldsenders für den vorgesehenen Übertragungsvorgang ausreichend ist. Ist beides der Fall, wird der Geldsender aufgefordert, die Abbuchung des zu übertragenden Geldbetrages durch Eingabe seiner PIN zu autorisieren.

Im Rahmen dieses Prüfungsvorganges wird zunächst durch den zweiten Server eine Verbindung zum ersten Server aufgebaut. Falls - wie in Fig. 1 und 2 - beide Server bei unterschiedlichen Betreibern laufen, geschieht dies anhand der Betreiber-ID und gegebenenfalls zusätzlich der Landesvorwahl bzw. entsprechenden Netzkennung. Im ersten Server wird nach Etablierung der Verbindung erkannt, daß es sich bei dem übermittelten Datensatz um eine TAN handelt, und mit Hilfe der TAN als Schlüssel werden die relevanten Transaktionsdaten (Geldbetrag, Währung, Kennung und gegebenenfalls zusätzlich Name des Geldempfänger) aus der Transaktions-Datenbasis ausgelesen und an den zweiten Server übermittelt. Wird kein Eintrag in der Transaktions-Datenbasis gefunden, so ist die TAN ungültig, und der Übertragungsvorgang wird abgebrochen.

An den zweiten Server des Geldsenders wird eine Aufforderung zur Prüfung übermittelt, ob das elektronische Guthaben auf dem Prepaid-Konto des Geldsenders für die vorgesehene Geldübertragung ausreicht. Ist dies nicht der Fall, wird die Übertragung mit einem entsprechenden Hinweissignal an das Endgerät des Geldempfängers und/oder Geldsenders abgebrochen. Ist der zu übertragende Geldbetrag gedeckt, wird er auf dem Prepaid-Konto des Geldsenders reserviert.

Anschließend erfolgt die erwähnte Autorisierung durch den Geldsender. Hierzu werden durch den zweiten Server die relevanten Transaktionsdaten (Geldbetrag, Währung und Name bzw. Kennung des Empfängers) als Textnachricht zur optischen Darstellung auf dem Display seines Endgerätes oder auch über die Synthese und Übermittlung einer Sprachmeldung an den Geldsender übermittelt. Dieser gibt zur Authentisierung und Autorisierung des Übertragungsvorganges beispielsweise eine PIN ein. Die eingegebene PIN wird mit der im Geldsender-Datensatz hinterlegten PIN verglichen. Ist sie gültig, wird der Abbuchungsvorgang eingeleitet. Ist sie ungültig, wird die Transaktion an dieser Stelle abgebrochen und wiederum ein entsprechendes Hinweissignal übermittelt.

Es folgt die Abbuchung des zu übertragenden Geldbetrages vom Prepaid-Konto des Geldsenders. Dieser Vorgang ist zeitkritisch und erfolgt in Echtzeit. Befindet sich das Prepaid-Konto des Geldsenders bei dem gleichen Betreiber wie die desjenigen des Geldempfängers, kann das Guthaben sofort (in Echtzeit) dem Geldempfänger gutgeschrieben werden. Befindet sich das Konto bei einem fremden Betreiber, muß die Aufbuchungsanforderung an die dortige Kontenverwaltung gestellt werden, und die Aufbuchung erfolgt unter deren Regime. Hierfür müssen die beteiligten Dienstbetreiber entsprechende Regelungen getroffen haben. Die Überweisung des Geldbetrages zum anderen Dienstbetreiber erfolgt beispielsweise über das herkömmliche Verfahren einer Banküberweisung.

In jedem Falle wird sinnvollerweise über den Abbuchungsvorgang ein Log-Record erstellt und der Geldempfänger und/oder Geldsender über das Kassensystem oder einen Anruf oder per SMS o. ä. über die Ausführung der Abbuchung informiert. Die Transaktionsbestätigung wird hierbei vom zweiten Server an den ersten Server übermittelt, wobei die TAN wiederum als Schlüssel zur Identifizierung der Transaktion dient. Durch den ersten Server wird eine Zahlungsbestätigung an das Endgerät des Geldempfängers generiert und abgesetzt. Diese Nachricht löst die Übergabe der Ware an den Consumer durch den Vendor oder eine Vending-Machine (beispielsweise einen Fahrkarten- oder Getränkeautomaten) aus. Schließlich wird nach erfolgter Ausgabe der Ware oder Dienstleistung der Eintrag des Vorganges in der Transaktions-Datenbasis gelöscht und die TAN zu einer neuen Verwendung freigegeben.

Es folgt die Aufbuchung des zu übertragenden Geldbetrages auf das Konto des Geldempfängers, bei dem es sich um ein Prepaid-Konto, ein Realtime-Account oder ein normales Bank-Girokonto handeln kann. Dieser Vorgang ist nicht zeitkritisch, muß aber mit höchster Zuverlässigkeit erfolgen. Auch hierbei sind die oben für das Abbuchen erwähnten Varianten zu unterscheiden - je nachdem, ob das Konto auf einem fremden Server geführt wird oder nicht. Auch für den Aufbuchungsvorgang wird ein Log-Record erstellt.

Der hier auch als Consumer-to-Consumer-Anwendung bezeichnete Fall einer Geldübertragung zwischen Privatleuten gestaltet sich weitgehend ähnlich der oben beschriebenen kommerziellen Applikation, jedoch entfallen einige Schritte bzw. es gibt gewisse Modifikationen.

Insbesondere wird normalerweise keine auf den einzelnen Übertragungsvorgang bezogene Transaktionsnummer benötigt und vergeben, sondern die erforderlichen Prüfungsvorgänge, einschließlich der dazugehörigen Speicherzugriffe, erfolgen anhand eines dem Geldempfänger fest zugewiesenen Identifikationscodes, insbesondere dessen Endgeräterufnummer. Dementsprechend gibt es auch keine Transaktions-Datenbasis im eigentlichen Sinne mit über die TAN adressier- und auslesbaren Datensätzen. Im entsprechenden Prüfungsvorgang überprüft der Dienstbetreiber lediglich, ob der Identifikationscode des Geldempfängers (Geldempfängernummer) eine gültige MSISDN ist und der Geldempfänger ein Prepaid-Konto hat.

Da bei dieser Ausführung der zweite Server (des Geldsenders) keine Transaktionsdaten vom ersten Server (des Geldempfängers) erhält, kann auch die Übermittlung des relevanten Geldbetrages nicht auf diesem Wege erfolgen. Vielmehr wird seitens des zweiten Servers eine an den Geldsender gerichtete Aufforderung zur Eingabe des zu übertragenden Geldbetrages generiert und übermittelt.

Die Übertragung einer Transaktionsbestätigung vom zweiten Server zum ersten Server ist hier optional und in der Regel nicht zeitkritisch, da im Normalfall nicht die Übergabe einer Ware oder Dienstleistung vom Erhalt der Transaktionsbestätigung abhängt. Es ist jedoch durchaus möglich, eine Abbuchungs- und/oder Aufbuchungsbestätigung zu erstellen und dem Geldempfänger beispielsweise via SMS oder E-Mail zu übermitteln. In diesem Zusammenhang kann auch die individuelle Kennzeichnung einzelner Geldübertragungsvorgänge (zur Unterscheidung von anderen, zeitnah ausgeführten) zweckmäßig sein; eine solche Kennzeichnung des einzelnen Übertragungsvorganges wird aber im Consumer-to-Consumer-Bereich normalerweise vom Geldempfänger ausgehen und durch den Dienstbetreiber lediglich als Zusatzinformation übertragen werden.

Die Ausführung der Erfindung ist nicht auf die erwähnten Beispiele, Varianten und Aspekte beschränkt, sondern im Rahmen der Ansprüche ebenso in einer Vielzahl von Abwandlungen möglich, die im Rahmen fachgemäßen Handelns liegen. Insbesondere sind die oben beschriebenen Verfahrensschritte auch in anderer Reihenfolge möglich.

## Patentansprüche

1. Verfahren zur Übertragung eines elektronischen Geldbetrages aus einem Guthabenspeicher eines Geldsenders, der insbesondere ein vorausbezahltes Guthaben aufweist, auf ein Konto bzw. in einen Guthabenspeicher eines Geldempfängers über ein Telekommunikations- und Datennetz, mit den Schritten:
- Vergabe eines ersten Identifikationscodes des Geldempfängers oder eines Übertragungsvorganges an den Geldempfänger,
- Speicherung eines Geldempfänger-Datensatzes, der mindestens den ersten Identifikationscode und einen Kontencode des Kontos bzw. Guthabenspeichers des Geldempfängers umfaßt, in einer Transaktions-Datenbasis und/oder einer ersten Kontenverwaltungs-Datenbasis bei einem ersten Server eines Dienstbetreibers,
- Speicherung eines Geldsender-Datensatzes, der mindestens einen zweiten Identifikationscode, insbesondere eine Rufnummer eines Endgerätes, und einen Kontencode des Guthabenspeichers des Geldsenders umfaßt, in einer zweiten Kontenverwaltungs-Datenbasis bei einem zweiten Server eines Dienstbetreibers,
- Übermittlung des ersten Identifikationscodes vom Geldempfänger an den Geldsender, insbesondere außerhalb des Telekommunikations- und Datennetzes,
- Aufbau einer Verbindung zwischen dem Endgerät des Geldsenders und dem zweiten Server unter Nutzung einer Server-Rufnummer oder Sondernummer und Übermittlung des ersten Identifikationscodes an den zweiten Server,
- Aufbau einer Datenverbindung zwischen dem zweiten und ersten Server der Dienstbetreiber von Geldsender und Geldempfänger oder eines gemeinsamen Dienstbetreibers, wobei ein Abschnitt des ersten Identifikationscodes zur An- bzw. Auswahl des ersten Servers genutzt wird, und Übermittlung des ersten Identifikationscodes an den ersten Server,
- Prüfung des ersten Identifikationscodes und des Vorhandenseins eines Kontos bzw. Guthabenspeichers des Geldempfängers und, bei positivem Prüfungsergebnis, Zuordnung des Kontencodes zu dem ersten Identifikationscode sowie Übermittlung des Prüfungsergebnisses an den zweiten Server,
- Eingabe des zu übertragenden Geldbetrages am Endgerät des Geldempfängers oder Geldsenders und Übermittlung an den zweiten Server,
- Prüfung der Deckung des Geldbetrages im Geldsender-Guthabenspeicher und Reservierung des Geldbetrages im Deckungsfall bzw. Abbruch mit Signalisierung im Unterdeckungsfall,
- Ausgabe einer Aufforderung an den Geldsender zur Autorisierung der Übertragung,
- Übermittlung der Autorisierungs-Eingabe vom Endgerät des Geldsenders an den zweiten Server und Prüfung bei diesem,
- Abbuchung des Geldbetrages aus dem Geldsender-Guthabenspeicher in Echtzeit und Dokumentation derselben bei positivem Ergebnis der Prüfung bzw. Abbruch bei negativem Ergebnis,
- Aufbuchung des Geldbetrages auf das Geldempfänger-Konto bzw. den Geldempfänger-Guthabenspeicher und Dokumentation derselben,
- Übermittlung einer Information über die Ab- und/oder die Aufbuchung an das Endgerät des Geldempfängers und/oder Geldsenders.

2. Verfahren nach Anspruch 1,
**gekennzeichnet durch**
die Verwendung einer dauerhaft gültigen Geldempfängernummer, insbesondere der Rufnummer des Endgerätes des Geldempfängers, als erster Identifikationscode.

3. Verfahren nach Anspruch 1,
**gekennzeichnet durch**
die Verwendung einer für einen einzelnen Übertragungsvorgang spezifischen, **durch** den ersten Server vergebenen Transaktionsnummer als erster Identifikationscode, wobei die Transaktionsnummer zur Adressierung eines Speicherbereiches einer beim ersten Server eingerichteten Transaktions-Datenbasis genutzt wird, in dem den Übertragungsvorgang betreffende Daten gespeichert werden.

4. Verfahren nach einem der vorangehenden Ansprüche,
**dadurch gekennzeichnet, daß**
der zu übertragende Geldbetrag durch den Geldsender an seinem Endgerät in Verbindung mit dem ersten Identifikationscode eingegeben, an den zweiten Server übermittelt und dort bis zur Prüfung der Deckung zwischengespeichert wird.

5. Verfahren nach einem der Ansprüche 1 bis 3,
**dadurch gekennzeichnet, daß**
- durch den zweiten Server eine Aufforderung zur Eingabe des zu übertragenden Geldbetrages an den Geldsender generiert und übermittelt und am Endgerät des Geldsenders ausgegeben und
- in Reaktion auf diese Aufforderung der Geldbetrag am Endgerät des Geldsenders eingegeben wird.

6. Verfahren nach einem der vorangehenden Ansprüche,
**dadurch gekennzeichnet, daß**
der Geldsender-Datensatz einen Authentisierungsdatensatz, insbesondere einen Authentisierungscode oder biometrische Daten des Geldsenders, umfaßt und vor dem Schritt der Abbuchung folgende Schritte zur Autorisierung derselben ausgeführt werden:
- Eingabe des Authentisierungscodes oder der biometrischen Daten durch den Geldsender an seinem Endgerät,
- Übermittlung derselben zum zweiten Server und
- Vergleich der übermittelten mit den im Geldsender-Datensatz vorliegenden Daten und Ausgabe eines Abbuchungs-Freigabesignals bei Übereinstimmung bzw. eines Abbuchungs-Sperrsignals bei Nichtübereinstimmung.

7. Verfahren nach einem der vorangehenden Ansprüche, insbesondere Anspruch 6,
**dadurch gekennzeichnet, daß**
die Schritte zur Autorisierung bei einem einen vorbestimmten Schwellwert übersteigenden Geldbetrag ausgeführt werden, welcher insbesondere durch den Dienstbetreiber oder den Geldsender einstellbar ist.

8. Verfahren nach einem der vorangehenden Ansprüche,
**dadurch gekennzeichnet, daß**
im Rahmen einer Subskription des Geldempfängers bei einem Dienstbetreiber im Geldempfänger-Datensatz eine Kontonummer einer regulären Bankverbindung gespeichert wird.

9. Verfahren nach einem der vorangehenden Ansprüche,
**dadurch gekennzeichnet, daß**
die Subskription des Geldempfängers beim Dienstbetreiber mit einer Mehrzahl von Konten und/oder Identifikationscodes, insbesondere Rufnummern, erfolgt, wobei insbesondere die Anzahl der Konten kleiner als die der Rufnummern ist, und wobei alle entsprechenden Kontencodes und die Identifikationscodes im Geldempfänger-Datensatz gespeichert werden.

10. Verfahren nach einem der vorangehenden Ansprüche, insbesondere einem der Ansprüche 2 bis 9,
**dadurch gekennzeichnet, daß**
die Geldempfängernummer eine Landesvorwahlnummer und einen Server-Identifikationscode des ersten Servers umfaßt.

11. Anordnung zur Übertragung eines elektronischen Geldbetrages aus einem Guthabenspeicher eines Geldsenders, der insbesondere ein vorausbezahltes Guthaben aufweist, auf ein Konto bzw. in einen Guthabenspeicher eines Geldempfängers über ein Telekommunikations- und Datennetz in Echtzeit, insbesondere zur Durchführung des Verfahrens nach einem der vorangehenden Ansprüche, welche aufweist:
- einen ersten Server mit mindestens einem Geldempfänger-Guthabenspeicher und einem Geldempfänger-Datenspeicher sowie Vergleichermitteln zum Vergleich von empfangenen Geldempfängerdaten, insbesondere eines Identifikationscodes eines Geldempfängers oder eines Übertragungsvorganges, mit gespeicherten Geldempfängerdaten,
- einen zweiten Server mit mindestens einem Geldsender-Guthabenspeicher und einem Geldsender-Datenspeicher sowie Mitteln zum Vergleich von empfangenen Geldübertragungsdaten, insbesondere eines zu übertragenden Geldbetrages, mit gespeicherten Geldsender-Guthabendaten bzw. Geldsenderdaten,
wobei der erste und zweite Server über eine Datenleitung des Telekommunikations- und Datennetzes verbunden bzw. verbindbar oder miteinander integral ausgeführt sind,
- ein an das Telekommunikations- und Datennetz angeschlossenes Endgerät des Geldempfängers und
- ein an das Telekommunikations- und Datennetz angeschlossenes Endgerät des Geldsenders.

12. Anordnung nach Anspruch 11,
**dadurch gekennzeichnet, daß**
auf dem ersten Server eine erste Transaktions-Datenbasis gespeichert ist, in der unter einem Identifikationscode des Geldempfängers oder des Übertragungsvorganges übertragungsrelevante Daten, insbesondere ein Kontencode und Guthabenstand des Geldempfängers, gespeichert sind.

13. Anordnung nach Anspruch 11 oder 12,
**dadurch gekennzeichnet, daß**
der Geldsender-Datenspeicher einen Speicherbereich zur Speicherung eines Authentisierungsdatensatzes des Geldsenders aufweist und ihm Vergleichermittel zum Vergleich von aktuell eingegebenen Authentisierungsdaten mit gespeicherten Authentisierungsdaten und zur Ausgabe eines Freigabe- oder Sperrsignals für den Übertragungsvorgang im Ergebnis des Vergleiches zugeordnet sind.

14. Anordnung nach einem der Ansprüche 11 bis 13,
**dadurch gekennzeichnet, daß**
der erste Server Zufallsgeneratormittel zur Erzeugung des Identifikationscodes zur eindeutigen Kennzeichnung eines Übertragungsvorganges und Verknüpfungsmittel zur Zuordnung des Identifikationscodes zum Geldempfänger-Datensatz aufweist.

15. Anordnung nach einem der Ansprüche 11 bis 14,
**dadurch gekennzeichnet, daß**
der erste und/oder zweite Server Mittel zur Dokumentierung eines Abbuchungsvorganges und eines Aufbuchungsvorganges, insbesondere als Log-Record, aufweist.

16. Anordnung nach einem der Ansprüche 11 bis 15,
**dadurch gekennzeichnet, daß**
dem ersten und/oder zweiten Server Telekommunikationsmittel zur Signalisierung eines Transaktionsabbruches oder einer Abbuchung und/oder einer Aufbuchung an das Endgerät des Geldsenders und/oder des Geldempfängers zugeordnet sind.

17. Anordnung nach einem der Ansprüche 11 bis 16,
**dadurch gekennzeichnet, daß**
das Telekommunikations- und Datennetz ein Mobilfunknetz umfaßt, wobei das Endgerät des Geldsenders und/oder das Endgerät des Geldempfängers als Mobilfunk-Endgerät oder mit einem Mobilfunkteil ausgerüstetes Datenverarbeitungsgerät ausgebildet ist und dem ersten und/oder zweiten Server ein Mobilfunk-Endgerät zugeordnet ist.

18. Anordnung nach einem der Ansprüche 11 bis 17,
**dadurch gekennzeichnet, daß**
das Endgerät des Geldempfängers mit einer Kasseneinrichtung derart verbunden ist, daß es von dieser den zu übertragenden Geldbetrag selbsttätig empfängt.

19. Warenausgabeautomat zur selbsttätigen Ausgabe einer Ware oder Dienstleistung,
**gekennzeichnet durch**
eine Datenverbindung zu einer Anordnung nach einem der Ansprüche 11 bis 18.

20. Kasseneinrichtung zur elektronischen Vereinnahmung eines für eine Ware oder Dienstleistung zu bezahlenden Geldbetrages,
**gekennzeichnet durch**
eine Datenverbindung zu einer Anordnung nach einem der Ansprüche 11 bis 18.
